# EUROPEAN PATENT APPLICATION

(11) **EP 3 239 051 A1**
(43) Date of publication of application: **01.11.2017**
(21) Application number: 16206371.3
(22) Date of filing: 22.12.2016
(51) Int. Cl.: B64D 11/06

(54) **AIRCRAFT SEAT WITH INTEGRATED LIFE VEST STORAGE**

(30) Priority: 07.01.2016 GB 201600276
(71) Applicant: Zodiac Seats UK Limited, Cwmbran NP44 3HQ (GB)
(72) Inventor: GOW, Rob, Cwmbran, NP44 3HQ (GB)
(74) Representative: Abel & Imray

(57) **Abstract**

The present invention concerns an aircraft seat (1) comprising a leg rest (3). The leg rest (3) comprises an upholstered substructure (7), wherein the substructure (7) comprises a first surface (9) spaced apart from a second surface (11) such that a life vest storage compartment is defined therebetween.

## Description

### Field of the Invention

The present invention concerns aircraft seats. More particularly, but not exclusively, this invention concerns an aircraft seat comprising a leg rest arranged with an integrated life vest storage compartment.

### Background of the Invention

In an 'economy-class' aircraft seat, the life vest is typically stored beneath the seat. This arrangement makes use of unused space within the aircraft and also provides the passenger with easy access to the life vest in the event of an emergency.

Other classes of aircraft seat, for example business and first class aircraft seats with movable leg rests, can comprise leg rests which block access to the underside of the seat so an alternative life vest storage strategy must be used in these cases. In such circumstances, US patent number 6,588,839 proposes replacement of a conventional upholstery element on the leg rest with an upholstery element containing a life vest. The life vest in this situation is folded to act as a cushion and forms the padding of the upholstery element. Use of a life vest as upholstery can subject the life vest to unnecessary fatigue loading which may subsequently lead to premature degradation of the life vest and an increased frequency of life vest inspection being required. This may increase the maintenance costs of running the aircraft. Furthermore, use of a life vest as a cushion may compromise passenger comfort.

The present invention seeks to mitigate the above-mentioned problems.

### Summary of the Invention

The present invention provides, according to a first aspect, an aircraft seat comprising a leg rest, the leg rest comprising an upholstered substructure, wherein the substructure comprises a first surface spaced apart from a second surface such that a life vest storage compartment is defined therebetween.

Storing the life vest in the space between surfaces of the substructure advantageously makes use of otherwise potentially unused space within the aircraft seat. Furthermore, storage of the life vest between surfaces of the substructure means that the substructure can be upholstered conventionally. Providing a first surface and second surface to create a life vest storage compartment may also provide protection to the life vest, for example reducing or preventing the risk of puncture damage.

The aircraft seat may comprise a back rest and a seat pan. The back rest, seat pan, and leg rest may be mounted upon a chassis. The chassis may be arranged to be fixed to the floor of an aircraft. The aircraft seat may be a multi-position seat in which the back rest, seat pan, and leg rest are all movable relative to the chassis. The leg rest may be mounted to the chassis at a point that is fixed with respect to the seat pan.

The leg rest may be mounted to the aircraft seat pan at a point that is fixed with respect to the seat pan and/or chassis.

The leg rest may be pivotable about a point that is fixed with respect to the seat pan and/or chassis.

The leg rest may be movable between a first position and a second position, the first position corresponding to a position in which the leg rest is in a substantially vertical position and the second position corresponding to a position in which the leg rest is in a substantially horizontal position. The horizontal and vertical orientations may be with respect to an aircraft cabin floor in which the aircraft seat is situated.

The first surface may be arranged such that it does not contact the legs of a passenger sitting in the aircraft seat. The first surface may be rigid. The first surface may be made of sheet metal. The first surface may be made of composite materials. The first surface may be made of plastic. The first surface may be upholstered such that upholstery is located between the first surface and the legs of a passenger sitting in the aircraft seat. It will be understood that the term 'upholstery' encompasses all forms of padding and cushions and the like which are typically used to increase passenger comfort in the regions of an aircraft seat with which a passenger comes directly into contact when using said seat.

The first surface may comprise a door. The door may be movable between an open position in which the life vest compartment may be accessed and a closed position where access to the life vest compartment is blocked. An aperture may be located in the first surface, the aperture sized such that a life vest may be passed through the aperture and into the compartment. The door may be movable to a closed position in which the aperture is covered by the door. The door may be upholstered. The door may be associated with a tamper-evident seal. The tamper-evident seal may indicate whether the door has been opened or tampered with.

The substructure may comprise a fastener arranged to fasten the door in the closed position.

Fastening the door in the closed position may advantageously stop the life vest falling out of the life vest compartment.

The fastener may comprise a hasp, the hasp comprising a hasp slot, the hasp slot having a width and a length, wherein the hasp further comprises a pin that spans the width of the hasp slot.

The fastener may further comprise a slotted block comprising a block slot, the block slot having a length and a width, wherein the slotted block further comprises a bridging member, the bridging member spanning the width of the block slot.

It will be understood that a slot comprises a length and a width, the length being greater than the width.

The hasp may sit against the slotted block when the door is in the closed position such that a tamper-evident seal may be passed around both of the bridging member and pin.

A tamper-evident seal may advantageously indicate whether the life vest compartment has been opened and may also discourage passengers from unnecessarily opening the life vest compartment.

The tamper-evident seal may comprise a main body and the slotted block may be arranged to receive the main body of the tamper-evident seal.

Arranging the slotted block to receive the body of the tamper-evident seal may advantageously move the tamper-evident seal to a position in which it is less likely to be accidentally damaged. Accidental damage to the tamper-evident seal may lead to an inspector falsely suspecting that a life vest compartment has been tampered with or opened.

The tamper-evident seal may further comprise a shackle, the shackle comprising a length of material; wherein the tamper-evident seal is configurable to a sealed position in which both distal ends of the shackle are attached to the main body.

The leg rest may comprise a life vest stored within the life vest storage compartment.

According to a second aspect, the present invention provides a leg rest comprising an upholstered substructure, wherein the substructure comprises a first surface spaced apart from a second surface such that a life vest storage compartment is defined therebetween.

According to a third aspect, the present invention provides a method of installing a life vest in an aircraft seat, the aircraft seat according to the first aspect of the invention, providing a life vest, and placing the life vest within the life vest storage compartment.

The step of placing the life vest within the life vest storage compartment may include the step of passing the life vest through an aperture located in the first surface of the substructure. The step of placing the life vest within the life vest storage compartment may be followed by the step of covering the aperture located in the first surface of the substructure with a door. The step of covering the aperture located in the first surface of the substructure with a door may be followed by the step of fastening the door in a closed position. The step of fastening the door in a closed position may include the steps of providing a tamper-evident seal associated with the door. The step of fastening the door in the closed position in association with the tamper-evident seal may be followed by the step of moving the tamper-evident seal to a position in which it is at least partially contained within the substructure.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows an aircraft seat according to a first embodiment of the invention;
Figure 2 shows the substructure of the leg rest of the aircraft seat shown in Figure 1;
Figure 3 shows the pull-tab assembly of the substructure shown in Figure 2;
Figure 4a shows the fastener of the substructure shown in Figure 3a sealed with a tamper-evident seal; and
Figure 4b shows the tamper-evident seal rotated such that the body of the tamper-evident seal is located within the slotted block.

### Detailed Description

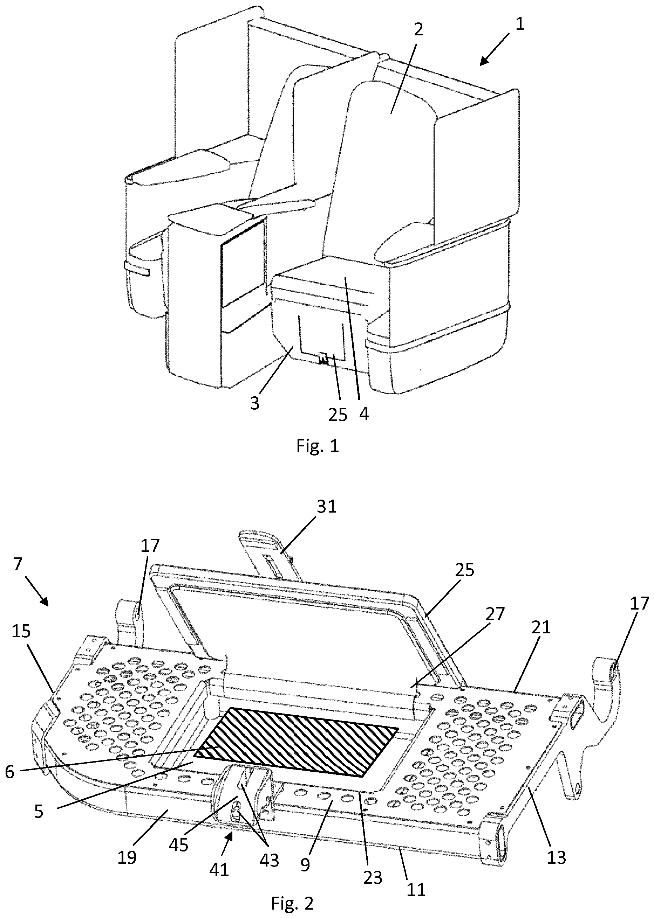

Figure 1 shows an aircraft seat 1 according to an embodiment of the invention. The aircraft seat comprises a back rest 2, a seat pan 4, and leg rest 3 mounted upon a chassis (not shown in the figures) which is fixedly mounted upon the floor of the aircraft.

The aircraft seat 1 is a multi-position aircraft seat in which the back rest 2, seat pan 4, and leg rest 3 are all movable relative to the chassis. The aircraft seat 1 is movable between two extreme positions; a taxi, take-off, and landing (TTL) position and a bed mode position. In the TTL position, the back rest 2 is positioned upright and the leg rest 3 is stowed in a near vertical position in the space between the underside of the seat pan 4 and the floor of the aircraft cabin, such that a passenger may sit upright in the seat 1 with their feet resting upon the floor of the aircraft cabin.

In the bed mode position the back rest 2 is reclined, the seat pan 4 is moved away from the back rest 2, and the leg rest 3 is in a substantially horizontal position, such that a passenger may sit in a reclined position in the seat 1 with their legs resting upon the leg rest 3. The vertical and horizontal orientations are relative to the aircraft cabin floor to which the aircraft seat is attached.

The leg rest 3 is arranged such that a life vest 6 may be stored within a life vest storage compartment 5 situated the substructure 7 of the leg rest 3. The substructure 7, shown in Figure 2, is the structure of the leg rest 3 upon which upholstery is mounted for the purpose of passenger comfort.

The substructure 7, which may be constructed from sheet metal or the like, comprises a top surface 9 spaced apart from a bottom surface 11. The top surface 9 is upholstered and, when the leg rest 3 is in the extended position, the top surface 9 supports the passenger's legs. The space between the top surface 9 and bottom surface 11 forms the thickness of the substructure 7 and defines the life vest storage compartment 5.

The top surface 9 and bottom surface 11 are fastened to left and right support members 13, 15. The support members 13, 15 being located on left and right, opposite, sides of the substructure 7 and spanning the space between the top surface 9 and bottom surfaces 11. Each support member 13,15, comprises at a distal end a seat pan connection point 17 such that the leg rest 3 may be mounted upon corresponding leg rest 3 connection points located on left and right sides the seat pan.

The left and right support members 13, 15 are connected by a back edge stiffening member 21 and a front edge stiffening member 19. The front edge stiffening member 19 and rear edge stiffening member 21, which are located at the front and back, opposite, edges of the substructure 7, run transversely across the width of the substructure 7 and also span the space between the top and bottom surfaces 9, 11. The connected support members 13, 15 and stiffening members 19, 21 form a frame; the top and bottom surfaces 9, 11 are mounted on opposite sides of the frame and are spaced apart by the frame.

The top surface 9 is upholstered with cushions, as shown in Figure 1, such that when the aircraft seat 1 is in the bed mode position the legs of a passenger sitting in the aircraft seat 1 are supported by the cushions.

When mounted upon the chassis, the substructure 7 is arranged to pivot about the chassis connection points 17 between the TTL position, shown in Figure 1, and the bed mode position.

The substructure 7 is arranged such that a life vest 6 may be stowed in a life vest storage compartment 5 formed by the empty space between the top surface 9 and bottom surface 11, as shown in Figure 2. An aperture 23 in the top surface 9 acts as an opening for the life vest storage compartment 5. The aperture 23 is sized such that a suitably folded life vest 6 may be passed through the aperture 23 and placed into the empty space between the top surface 9 and bottom surface 11. A door 25 is attached to the substructure 7 via flexible hinge 27 and is arranged to cover the aperture 23 when closed. The door 25 is upholstered with cushions, as shown in Figure 1, such that that the legs of a passenger sitting in the aircraft seat 1 when the aircraft seat 1 is in the bed mode position are supported by the cushions. The hinge 27 is positioned such that a passenger sitting in the aircraft seat with the leg rest 3 in the stowed position, shown in Figure 1, would have to pull the lowest edge of the door 25 upwards and outwards in order to access the life vest 6 stowed within the substructure 7. A pull tab may be associated with the lowest edge of the door 25 in order to assist the passenger in doing this. In an alternative embodiment, the arrangement may be reversed, such that the hinge 27 is located at the lowest edge of the door 25, and a pull tab is located at the top edge of the door 25.

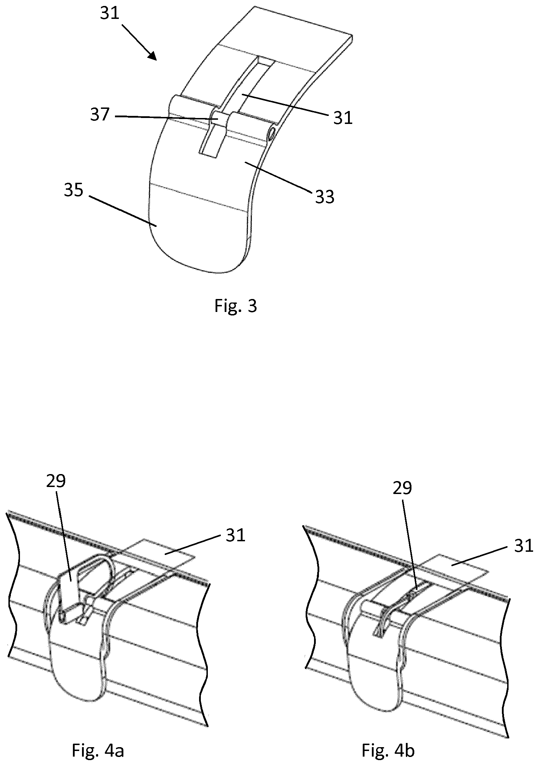

The substructure 7 further comprises a modified hasp and staple fastener which is arranged such that the life vest compartment 5 may be fastened in position, and a tamper-evident seal 29 associated with the fastener. A pull-tab assembly 31, shown in detail in Figure 3, extending from the lower edge of the door 25 comprises a modified hasp 33 and, at the free end, a pull tab 35. The modified hasp 33 comprises a steel pin 37 spanning the width of the slot. A modified staple arrangement is located on the top surface 9 of the substructure 7, between the lower stiffening member and the lower edge of the aperture 23, such that when the door 25 is covering the life vest storage compartment 5 the modified hasp 33 sits against the modified staple 41. The modified staple 41 does not consist of a conventional staple which is arranged to pass through the notch of the hasp 33, but instead takes the form of a slotted block. When the modified hasp 33 sits against the modified staple 41, the slot of the modified hasp 33 aligns with the slot of the modified staple 41. The modified staple comprises a bridging member 45 which spans the width of the slot of the modified staple 41 such that when the door 25 is covering the life vest storage compartment 5 and the modified hasp 33 and staple are in contact, the bridging member 45 and pin 37 are parallel and adjacent. When the door 25 is closed, a tamper-evident seal 29 may be passed around the bridging member 45 and pin 37 and sealed, as shown in Figure 4a, such that the door 25 may not be opened without breaking the tamper-evident seal 29. When sealed, the tamper-evident seal 29 may be rotated about the pin 37 and bridging member 45 such that the body of the tamper-evident seal 29 sits within the slot of the modified staple, as shown in Figure 4b.

In order to access the life vest 6, a seated passenger must reach between their legs and pull the pull-tab upwards (towards the torso of the passenger). This action will pull the door 25 open and break the tamper-evident seal 29 in the process. The passenger may then remove the life vest 6 from the life vest storage compartment 5. The broken tamper-evident seal 29 will provide a clear indication that the door 25 has been opened or tampered with.

In the alternative embodiment, with the hinge and the pull-tab reversed in position, the passenger pulls the pull-tab downwards to open the door and access the life vest 6.

Whilst the present invention has been described and illustrated with reference to particular embodiments, it will be appreciated by those of ordinary skill in the art that the invention lends itself to many different variations not specifically illustrated herein. For example, the thickness of the leg rest may be greater than required for storage of a life vest. In such an embodiment, spacers or support elements may be located in the leg rest in order that the life vest is securely housed in the life vest storage compartment. In an alternative embodiment, the life vest may be of greater thickness than the side elements of the leg rest, meaning that the life vest storage compartment extends outwards with respect to the bottom surface of the leg rest. The life vest storage compartment may be formed by a container mounted to the rear of the top surface 9 of the substructure, such that the container defines the bottom surface 11 of the substructure. In a further alternative embodiment, the door 25 may be secured in the closed position with a tight fit in the aperture located in the first surface 9.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An aircraft seat comprising a leg rest, the leg rest comprising an upholstered substructure,
wherein the substructure comprises a first surface spaced apart from a second surface such that a life vest storage compartment is defined therebetween.

2. An aircraft seat according to claim 1 comprising a seat pan, wherein the leg rest is pivotable about a point that is fixed with respect to the seat pan.

3. An aircraft seat according to claim 1 or claim 2 wherein the leg rest is movable between a first position and a second position,
the first position corresponding to a position in which the leg rest is in a substantially vertical position and the second position corresponding to a position in which the leg rest is in a substantially horizontal position.

4. An aircraft seat according to any of claims 1 to 3, wherein the first surface comprises a door.

5. An aircraft seat according to claim 4, wherein the door is movable between an open position in which the life vest compartment may be accessed and a closed position where access to the life vest compartment is blocked.

6. An aircraft seat according to claim 4 or claim 5 wherein the door is upholstered.

7. An aircraft seat according to any of claims 4 to 6, wherein a tamper-proof seal is associated with the door.

8. An aircraft seat according to any of claims 4 to 7, wherein the substructure comprises a fastener arranged to fasten the door in the closed position.

9. An aircraft seat according to claim 7 or 8 wherein the fastener comprises a hasp, the hasp comprising a hasp slot, the hasp slot having a width and a length, wherein the hasp further comprises a pin that spans the width of the hasp slot.

10. An aircraft seat according to claim 9 wherein the fastener further comprises a slotted block comprising a block slot, the block slot having a length and a width, wherein the slotted block further comprises a bridging member, the bridging member spanning the width of the block slot.

11. An aircraft seat according to claim 10 wherein the hasp sits against the slotted block when the door is in the closed position and a tamper-evident seal passes around both of the bridging member and pin.

12. An aircraft seat according to claim 11 wherein the tamper-evident seal comprises a main body and the slotted block is arranged to receive the main body of the tamper-evident seal.

13. An aircraft seat according to claim 12 wherein the tamper-evident seal further comprises a shackle, the shackle comprising a length of material;
wherein the tamper-evident seal is configurable to a sealed position in which both distal ends of the shackle are attached to the main body.

14. An aircraft seat according to any preceding claim wherein the leg rest comprises a life vest stored within the life vest storage compartment.

15. A leg rest comprising an upholstered substructure, wherein the substructure comprises a first surface spaced apart from a second surface such that a life vest storage compartment is defined therebetween.

16. A method of installing a life vest in an aircraft seat, the aircraft seat as claimed in claim 1, the method comprising the steps of:
(i) providing a life vest,
(ii) placing the life vest within the life vest storage compartment.

17. A method according to claim 16 wherein the step of placing the life vest within the life vest storage compartment includes the step of
passing the life vest through an aperture located in the first surface of the substructure.

18. A method according to claim 17 wherein the step of placing the life vest within the life vest storage compartment is followed the step of
covering the aperture located in the first surface of the substructure with a door.

19. A method according to claim 18 wherein the step of covering the aperture located in the first surface of the substructure with a door is followed by the step of
fastening the door in a closed position.

20. A method according to claim 19 wherein the step of fastening the door in a closed position includes the steps of
fastening the door in a closed position in association with a tamper-evident seal.

21. A method according to claim 20 wherein the step of fastening the door in the closed position associated with a tamper-evident seal is followed by the step of
moving the tamper-evident seal to a position in which the tamper-evident seal is at least partially contained within the substructure.

22. An aircraft seat substantially as herein described with reference to any of Figures 1 to 4.

23. A leg rest substantially as herein described with reference to any of Figures 1 to 4.

24. A method of installing a life vest in an aircraft seat substantially as herein described with reference to any of Figures 1 to 4.
